# FASCICULE DE BREVET EUROPEEN

(11) **EP 0 486 407 B1**
(45) Date de publication et mention de la délivrance du brevet: **06.07.1994**
(21) Numéro de dépôt: 91420398.9
(22) Date de dépôt: 08.11.1991
(51) Int. Cl.: F24D 5/10, F24D 13/02

(54) **Elément de plafond comportant des moyens de régulation de température du local qu'il équipe**
Deckenelement mit Temperaturregelvorrichtungen des Raums in dem es installiert ist
Ceiling element having means for regulating the temperatur of the room in which it is installed

(30) Priorité: 13.11.1990 FR 9014674
(43) Date de publication de la demande: 20.05.1992
(73) Titulaire: SERTIM TEVAL, F-69270 Fontaines sur Saone (FR)
(72) Inventeur: Tavernier, Bernard, F-69450 Saint-Cyr au Mont d'Or (FR)
(74) Mandataire: Maureau, Philippe

(56) Documents cités:
- DE-A- 1 963 889
- DE-A- 2 138 667
- DE-A- 3 238 970
- US-A- 3 057 989

## Description

La présente invention a pour objet un élément de plafond comportant des moyens de régulation de température du local qu'il équipe.

Il est connu de réaliser le chauffage d'un local par rayonnement à partir d'éléments de plafond. A cet effet, chaque élément de plafond est équipé d'un film chauffant, recouvert du côté du local par un élément décoratif, ou panneau de parement, et sur son autre face par une couche de matériau isolant, tel que de la laine de verre.

Ce type de chauffage est très intéressant par le confort qu'il procure. En effet, les éléments de plafond jouent le rôle d'émetteurs de chaleur, les calories étant transmises par rayonnement vers les corps froids, tels que les meubles, que contient le local à chauffer. Il en résulte un mode de chauffage très confortable pour les utilisateurs, ainsi qu'une augmentation du volume disponible et de l'esthétique du local par suppression des radiateurs ou convecteurs utilisés avec les modes de chauffage traditionnels.

Par ailleurs, il est connu de réaliser le refroidissement de locaux en période chaude, que ce soit pour des raisons de confort des occupants, ou pour des raisons imposées par les conditions de fonctionnement de certains appareils, tels que des systèmes informatiques.

Aujourd'hui, le refroidissement d'un local est réalisé par de l'air froid pulsé. Cette solution présente l'inconvénient d'un certain inconfort pour utilisateurs en raison du bruit émis par la pulsion d'air, ainsi que d'un inconfort pour les utilisateurs se trouvant près des bouches de sortie d'air, en raison du courant d'air engendré à proximité de celles-ci.

Le document DE-A-2 138 667 concerne un élément de plafond équipé de moyens de chauffage et de buses d'insufflation d'air à l'intérieur du local équipé.

Le document US-A-3 057 989 concerne un élément mural équipé de résistance de chauffage et éventuellement d'un groupe de climatisation d'air prenant l'air à l'extérieur du local et l'insufflant à l'intérieur de celui-ci, après refroidissement.

Le but de l'invention est de fournir un élément de plafond qui assure, en période hivernale, un chauffage par rayonnement du local qu'il équipe, en se comportant comme un émetteur de chaleur, et qui, en période chaude, permette un refroidissement de ce même local, en se conduisant comme un absorbeur de chaleur.

A cet effet, l'élément de plafond, selon l'invention, comprend un caisson de forme générale parallélépipédique, dont la face inférieure, éventuellement revêtue d'une paroi de parement, est située du côté du local à équiper, dont la face supérieure est revêtue d'au moins une couche de matériau isolant thermique, et dont deux parois latérales comportent des ouvertures allongées, dont l'une est entourée par un joint destiné à assurer l'étanchéité sur le pourtour de l'ouverture complémentaire d'un caisson voisin pour permettre le passage de l'air de ce caisson dans le caisson voisin, formant un circuit étanche raccordé par ses extrémités à un réseau de circulation d'air à une température contrôlée, ce caisson étant en outre équipé de moyens de chauffage.

Il est ainsi possible de réaliser, de façon simple et rapide, l'assemblage des éléments de plafond tout en bénéficiant d'une excellente étanchéité du passage de l'air d'un caisson au caisson voisin.

Selon une caractéristique de l'invention, le réseau de circulation d'air est équipé d'une source de refroidissement.

Selon l'invention, le réseau de circulation d'air est également équipé d'une source de chauffage.

Avantageusement, les moyens de chauffage du caisson sont constitués par un film chauffant électrique, associé à la paroi du caisson située du côté du local à équiper.

Avantageusement, le film chauffant est situé sur la face extérieure de cette paroi du caisson, et revêtu d'un panneau de parement.

En pratique, en période hivernale, les moyens de chauffage du caisson sont en fonctionnement, de telle sorte que l'élément de plafond se comporte comme un émetteur de chaleur permettant un chauffage par rayonnement. Au contraire, en période estivale et lorsque le local doit être refroidi, les moyens de chauffage sont hors fonctionnement, et le caisson est traversé par un courant d'air froid, l'élément de plafond se comportant alors comme un absorbeur de chaleur.

En période de chauffage, l'air contenu dans chaque caisson étant statique, participe à l'isolation thermique de ce caisson.

Il est intéressant de noter que le chauffage d'hiver peut aussi être assuré par une circulation d'air chaud, permettant, si l'élément de plafond est également équipé d'un film chauffant, la souplesse d'un chauffage bi-énergie.

Avantageusement, chaque caisson comporte deux pièces correspondant à deux de ses parois d'extrémité, dont chacune présente une ouverture longitudinale pour le passage d'air, dans une face de laquelle est ménagée une fente en forme générale en U servant à l'encastrement d'une extrémité, également en U, d'un panneau formant la paroi supérieure et les parois latérales du caisson, et dans l'autre face de laquelle est ménagée, sur le pourtour de l'ouverture longitudinale, une rainure, la rainure d'une pièce du caisson étant équipée d'un joint alors que la rainure de l'autre pièce du caisson demeure libre, la face inférieure des deux pièces servant à la fixation d'une paroi inférieure.

Il est ainsi procédé à la réalisation d'un caisson à partir de deux pièces d'extrémité identiques et de deux panneaux, par exemple en tôle, de formes simples.

En outre, chaque pièce d'extrémité comporte une face extérieure présentant une partie supérieure perpendiculaire au plan du caisson, dans laquelle est ménagée l'ouverture de passage d'air, et une partie inférieure inclinée de haut en bas et de l'extérieur du caisson vers l'intérieur de celui-ci.

Après mise bout à bout de deux caissons, il est ainsi obtenu un vide triangulaire permettant le logement d'une partie des profilés de support des caissons.

Dans le cas d'un caisson d'angle, c'est-à-dire destiné à devier le courant d'air de 90°, le caisson comporte deux pièces de raccordement à deux caissons voisins sur'deux de ses faces à 90° l'une de l'autre, l'intérieur du caisson étant équipé, sur toute sa hauteur, d'un déflecteur formant un arc de cercle centré sur l'angle du caisson commun aux deux pièces.

De toute façon, l'invention sera bien comprise à l'aide de la description qui suit, en référence au dessin schématique annexé représentant, à titre d'exemple non limitatif, une forme d'exécution de cet élément de plafond :
Figure 1 est une vue en perspective de deux éléments juxtaposés en position assemblée, le matériau isolant de l'un des deux éléments ayant été retiré, pour la clarté du dessin, et l'isolant de l'autre élément étant partiellement arraché ;
Figure 2 est une vue en perspective éclatée d'un élément selon l'invention ;
Figure 3 est une vue en coupe longitudinale et à échelle agrandie, de l'élément de figure 2.
Figure 4 est une vue très schématique de l'installation d'une pièce d'un local à l'aide d'éléments selon l'invention.

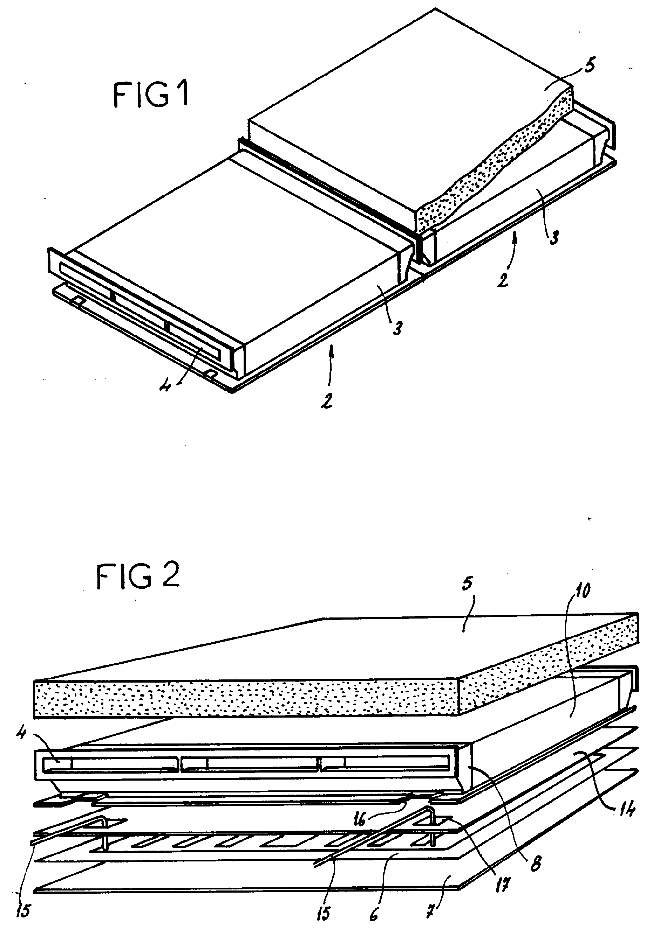

L'élément 2 selon l'invention, tel que représenté aux figures 1 à 4, comprend un caisson 3 de forme parallélépipèdique, comportant dans deux de ses parois des ouvertures 4 destinées respectivement à l'entrée et à la sortie de l'air, dont la face supérieure sert au support d'une couche 5 de matériau isolant thermique, tel qu'une laine minérale, et dont la face inférieure sert au support d'un film chauffant 6, éventuellement revêtue d'une paroi de parement 7.

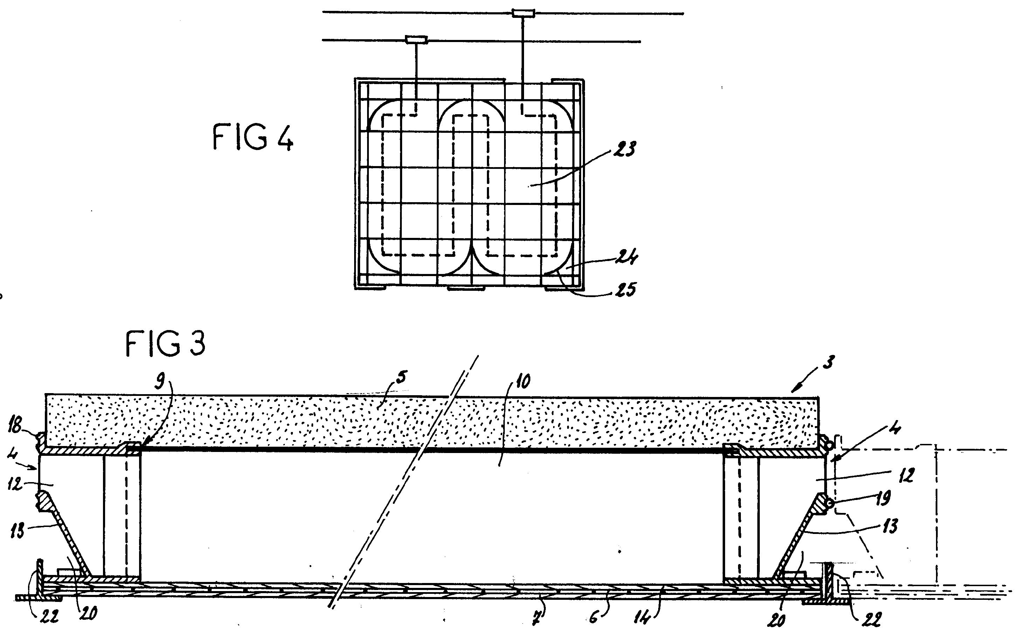

Les figures 2 et 3 représentent plus en détail un élément selon l'invention.

L'élément représenté au dessin comprend deux pièces 8 en matière synthétique formant deux parois d'extrémité, dont chacune comporte une ouverture longitudinale 4 pour le passage d'air. Dans sa face tournée vers l'intérieur du caisson, chaque pièce d'extrémité 8 comporte une fente 9 servant à l'encastrement d'une extrémité d'un panneau 10 en tôle, plié de façon à former un U constituant la paroi supérieure et les parois latérales du caisson, les bords libres des parois latérales comportant chacun un retour vers l'extérieur parallèle à la paroi supérieure. Chaque pièce 8 comporte, sur sa face tournée vers l'extérieur, une partie supérieure 12 perpendiculaire au plan du caisson, dans laquelle est ménagée une ouverture 4 pour le passage de l'air, et une partie inférieure 13 inclinée de haut en bas et de l'extérieur du caisson vers l'intérieur de celui-ci. La partie inférieure du caisson est fermée par un panneau 14, par exemple en tôle, fixé par collage sur les faces inférieures des deux pièces 8, ainsi que sur les retours latéraux de la paroi 10. Sur la face inférieure du panneau 14 est fixé le film chauffant 6, ainsi qu'une éventuelle paroi de parement 7. Comme montré notamment à la figure 2, il est prévu, pour le passage des fils 15 d'alimentation du film chauffant 6, des évidements 16 dans chaque pièce d'extrémité 8 et des ouvertures 17 dans la paroi inférieure 14.

Dans le bord délimitant chaque ouverture 4, destinée au passage de l'air, est ménagée une rainure périphérique 18. La rainure 18 associée à l'une des pièces est équipée d'un joint d'étanchéité 19, alors que la rainure associée à l'autre pièce demeure libre. De ce fait, lors de la mise bout à bout de deux éléments, le joint 19 associé à l'une des pièces est engagé dans la rainure 18 de l'élément adjacent, ce qui permet d'obtenir immédiatement une parfaite étanchéité.

Comme il ressort également du dessin, en position assemblée de deux caissons voisins, un vide 20 est ménagé dans la zone d'assemblage inférieure de deux éléments, qui permet, d'une part, de réaliser le passage des fils d'alimentation 15 et, d'autre part, de loger une partie des profilés 22 de suspension du plafond.

La figure 4 représente un exemple d'implantation d'éléments selon l'invention dans une pièce, les éléments selon l'invention étant disposés de façon adjacente 2 à 2 de façon à communiquer, avec ménagement d'un certain nombre d'éléments 23 qui sont purement décoratifs.

Comme cela ressort de la figure 4, certains caissons 24 sont conformés de façon particulière pour réaliser une déviation du courant d'air de 90°. Ces caissons 24 comportent deux pièces de raccordement disposées sur deux faces à 90° l'une de l'autre, et l'intérieur du caisson est équipé, sur toute sa hauteur, d'un déflecteur 25 formant un arc de cercle centré sur l'angle du caisson comme un haut de pièce d'extrémité 8.

Comme il va de soi, l'invention apporte une grande amélioration à la technique existante, en fournissant un élément de plafond pouvant se comporter comme émetteur de chaleur en période de chauffage, et comme absorbeur de calories lorsqu'un refroidissement du local est recherché.

## Revendications

1. Elément de plafond comportant des moyens de régulation de température du local qu'il équipe, caractérisé en ce qu'il comprend un caisson (3) de forme générale parallélépipédique, dont la face inférieure, éventuellement revêtue d'une paroi de parement (7), est située du côté du local à équiper, dont la face supérieure est revêtue d'au moins une couche (5) de matériau isolant thermique, et dont deux parois latérales comportent des ouvertures allongées (4) dont l'une est entourée par un joint (19) destiné à assurer l'étanchéité sur le pourtour de l'ouverture complémentaire d'un caisson voisin pour permettre le passage de l'air de ce caisson dans le caisson voisin, formant un circuit étanche raccordé par ses extrémités à un réseau de circulation d'air à une température contrôlée, ce caisson étant en outre équipé de moyens de chauffage (6).

2. Elément de plafond selon la revendication 1, caractérisé en ce que le réseau de circulation d'air est équipé d'une source de refroidissement.

3. Elément de plafond selon la revendication 2, caractérisé en ce que le réseau de circulation d'air est également équipé d'une source de chauffage.

4. Elément de plafond selon l'une quelconque des revendications 1 à 3, caractérisé en ce que le moyens de chauffage du caisson (3) sont constitués par un film chauffant électrique (6), associé à la paroi du caisson située du côté du local à équiper.

5. Elément de plafond selon la revendication 4, caractérisé en ce que le film chauffant (6) est situé sur la face extérieure de cette paroi du caisson (3), et revêtu d'un panneau de parement (7).

6. Elément de plafond selon l'une quelconque des revendications 1 à 5, caractérisé en ce que chaque caisson comporte deux pièces (8) correspondant à deux de ses parois d'extrémité, dont chacune présente une ouverture longitudinale (4) pour le passage d'air, dans une face de laquelle est ménagée une fente (9) en forme générale de U servant à l'encastrement d'une extrémité, également en U, d'un panneau (10) formant la paroi supérieure et les parois latérales du caisson, et dans l'autre face de laquelle est ménagée, sur le pourtour de l'ouverture longitudinale, une rainure (18), la rainure d'une pièce du caisson étant équipée d'un joint (19) alors que la rainure de l'autre pièce du caisson demeure libre, la face inférieure des deux pièces (8) servant à la fixation d'une paroi inférieure (14).

7. Elément de plafond selon la revendication 6, caractérisé en ce que chaque pièce d'extrémité (8) comporte une face extérieure présentant une partie supérieure (12) perpendiculaire au plan du caisson, dans laquelle est ménagée l'ouverture (4) de passage d'air, et une partie inférieure (13) inclinée de haut en bas et de l'extérieur du caisson vers l'intérieur de celui-ci.

8. Elément de plafond selon la revendication 6, caractérisé en ce que dans le cas d'un caisson d'angle, c'est-à-dire destiné à dévier le courant d'air de 90°, le caisson comporte deux pièces (8) de raccordement à deux caissons voisins sur deux de ses faces à 90° l'une de l'autre, I'intérieur du caisson étant équipé, sur toute sa hauteur, d'un déflecteur (25) formant un arc de cercle centré sur l'angle du caisson commun aux deux pièces.

## Patentansprüche

1. Deckenelement mit Mitteln zum Regulieren der Temperatur desjenigen Raums, in dem sich das Deckenelement befindet,
**dadurch gekennzeichnet**,
daß das Deckenelement eine Kassette (3) aufweist, die im wesentlichen die Form eines Parallelepipeds hat, deren Unterseite gegebenenfalls mit einer Abdeckung (7) versehen ist, und die zur Seite des betreffenden Raums weist, deren Oberseite mit wenigstens einer thermischen Isolierschicht (5) ausgekleidet ist und deren Seitenflächen mit länglichen Öffnungen (4) versehen sind, von denen eine Öffnung mit einer Dichtung (19) umgeben ist, die dazu vorgesehen ist, um die Dichtigkeit am Umfang der komplementären Öffnung einer benachbarten Kassette sicherzustellen, um den Durchtritt von Luft von dieser Kassette in die benachbarte Kassette zu ermöglichen, wodurch eine abgedichtete Strömung geschaffen wird, die an ihren Enden an eine Quelle zum Zirkulieren von Luft mit kontrollierter Temperatur angeschlossen ist, wobei die Kassette auch Mittel (6) zum Heizen aufweist.

2. Deckenelement nach Anspruch 1,
**dadurch gekennzeichnet**,
daß die Quelle für die Zirkulation der Luft mit einer Quelle zum Abkühlen versehen ist.

3. Deckenelement nach Anspruch 2,
**dadurch gekennzeichnet**,
daß die Quelle für das Zirkulieren der Luft auch mit einer Wärmequelle versehen ist.

4. Deckenelement nach einem der Patentansprüche 1 - 3,
**dadurch gekennzeichnet**,
daß die Mittel zum Heizen der Kassette (3) durch einen elektrisch heizbaren Film (6) gebildet werden, der an derjenigen Wand der Kassette vorgesehen ist, die zu dem betreffenden Raum weist.

5. Deckenelement nach Anspruch 4,
**dadurch gekennzeichnet**,
daß der heizbare Film (6) sich an der Außenseite dieser Wand der Kassette (3) befindet und mit einer Abdeckung (7) ausgekleidet ist.

6. Deckenelement nach einem der Patentansprüche 1 - 5,
**dadurch gekennzeichnet**,
daß jede Kassette zwei Stücke (8) aufweist, die ihren Stirnwänden entsprechen, und von denen jedes Stück eine Längsöffnung (4) für den Durchtritt von Luft aufweist, in deren Fläche ein Schlitz (9) angelegt ist, der im wesentlichen die Form eines U hat, der zur Aufnahme eines ebenfalls U-förmigen Endes einer Platte (10) dient, die die Oberwand und die Seitenwände der Kassette ausbildet, wobei in der anderen Fläche ringsum die Längsöffnung eine Rille (18) angelegt ist, und wobei die Rille eines Kassettenstücks mit einer Verbindung (19) versehen ist, während die Rille des anderen Kassettenstücks frei bleibt, und wobei die Unterseite der beiden Stücke (8) zur Befestigung einer unteren Platte (14) dient.

7. Deckenelement nach Anspruch 6,
**dadurch gekennzeichnet,**
daß jedes Endstück (8) eine Außenfläche aufweist, die einen oberen Teil (12) hat, der sich senkrecht zur Ebene der Kassette erstreckt, und in der die Öffnung (4) für den Durchtritt der Luft angelegt ist, sowie einen unteren Teil (13), der von oben nach unten und von der Außenseite der Kassette zu deren Inneren hin geneigt ist.

8. Deckenelement nach Anspruch 6,
**dadurch gekennzeichnet**,
daß bei einer winkelig ausgebildeten Kassette, bei der der Luftstrom um 90° umgelenkt werden muß, die Kassette zwei Stücke (8) für den Anschluß an zwei benachbarte Kassetten aufweist, und zwar an zwei Flächen der Kassette, die miteinander einen Winkel von 90° einschließen, wobei das Innere der Kassette über seine gesamte Höhe einen Deflektor (25) aufweist, der einen Kreisbogen ausbildet, der auf dem Winkel zentriert ist, der den beiden Stücken gemeinsam ist.

## Claims

1. Ceiling element having means for regulating the temperature of the room in which it is installed,
characterised in that it comprises a box (3), parallelepipedal in shape overall, the bottom face of which, optionally clad with a facing (7), is situated on the side facing the room in which it is to be installed, the top face of which is clad with at least one layer (5) of thermal insulation material, and two lateral walls of which have elongate openings (4), one of which is surrounded by a joint (19) intended to provide a seal on the periphery of the complementary opening in an adjacent box for allowing air to pass from this box into the adjacent box, forming a sealed circuit connected at its ends to a system for circulating air at a controlled temperature, this box also being equipped with heating means (6).

2. Ceiling element according to Claim 1, characterised in that the air circulation system is equipped with a cooling source.

3. Ceiling element according to Claim 2, characterised in that the air circulation system is also equipped with a heating source.

4. Ceiling element according to any one of Claims 1 to 3, characterised in that the heating means in the box (3) consist of an electric heating film (6), associated with the wall of the chamber situated on the side facing the room in which it is to be installed.

5. Ceiling element according to Claim 4, characterised in that the heating film (6) is situated on the external face of this wall of the box (3), and is covered with a facing panel (7).

6. Ceiling element according to any one of Claims 1 to 5, characterised in that each box has two pieces (8) corresponding to two of its end walls, each of which has a longitudinal opening (4) for air to pass, in one face of which is provided a slot (9), U-shaped overall, for embedding one end, also U-shaped, of a panel (10) forming the top wall and the lateral walls of the box, and in the other face of which is provided, on the periphery of the longitudinal opening, a groove (18), the groove in one piece of the box being fitted with a joint (19) whilst the groove in the other piece of the box remains free, the bottom face of the two pieces (8) being used for fixing a bottom wall (14).

7. Ceiling element according to Claim 6, characterised in that each end piece (8) has an external face with a top part (12) perpendicular to the plane of the box, in which the air passage opening (4) is provided, and a bottom part (13) sloping from top to bottom and from the outside of the box towards the inside thereof.

8. Ceiling element according to Claim 6, characterised in that, in the case of an angled box, that is to say one intended to divert the air current through 90°, the box has two pieces (8) for connecting to two adjacent boxes on two of its faces at 90° to each other, the inside of the box being equipped, over its entire height, with a deflector (25) forming an arc of a circle centred on the corner of the box common to the two pieces.
